# EUROPEAN PATENT APPLICATION

(11) **EP 2 639 707 A1**
(43) Date of publication of application: **18.09.2013**
(21) Application number: 11840512.5
(22) Date of filing: 31.01.2011
(51) Int. Cl.: G06F 17/30

(54) **E-BOOK ADVERTISEMENT SYSTEM, E-BOOK ADVERTISEMENT METHOD, CLIENT DEVICE, ADVERTISEMENT-PROVISION DEVICE, PROGRAM, INFORMATION-RECORDING MEDIUM, AND E-BOOK UPDATE SYSTEM**

(30) Priority: 08.11.2010 JP 2010250294
(71) Applicant: Rakuten, Inc., Tokyo 140-0002 (JP)
(72) Inventor: TORII, Atsushi, Tokyo 140-0002 (JP)
(74) Representative: HOFFMANN EITLE
(86) International application number: PCT/JP2011/051919
(87) International publication number: WO 2012/063502

(57) **Abstract**

In order to update advertisements in an e-book based on contents which a user has browsed and has paid attention to in the e-book, a client device (10) is configured to: acquire an e-book including a text page and an advertisement page; display at least a part of a page included in the e-book on a touch panel (12); switch, when a page switching operation is received from a user, the page displayed on the touch panel (12), and zoom in and display, when a page zooming-in operation is received from the user, a specified part on the page displayed on the touch panel (12); and update the advertisement page based on advertisement data, the advertisement data being acquired, based on a history of the page and the zoomed-in part displayed on the touch panel (12) and associated with an advertisement subject selected from advertisement subjects determined in advance for the page and the zoomed-in part.

## Description

### Technical Field

The present invention relates to an e-book advertisement system, an e-book advertisement method, a client device, an advertisement-provision device, a program, an information-recording medium, and an e-book update system.

### Background Art

There is a system for providing individual users with advertisements selected to meet preferences of the individual users. For example, in Patent Literature 1 below, there is disclosed a system in which advertisements are selected by using preference information based on the past browsing history information on a user, and contents including the selected advertisements are delivered by means of streaming to a terminal of the user.

### Citation List

### Patent Literature

[Patent Literature 1] JP 2002-259433 A

### Summary of Invention

### Technical Problem

However, the conventional technology described above cannot update advertisements in an e-book once passed over to a user, based on contents which the user has browsed and has paid attention to in the e-book.

The present invention has been made in view of the above-mentioned problem, and therefore has an object to provide an e-book advertisement system, an e-book advertisement method, a client device, an advertisement-provision device, a program, an information-recording medium, which are capable of updating advertisements in an e-book based on contents which a user has browsed and has paid attention to in the e-book.

### Solution to Problem

In order to solve the above-mentioned problem, according to the present invention, there is provided an e-book advertisement system, including: e-book acquisition means for acquiring an e-book including a text page and an advertisement page; display means for displaying at least a part of a page included in the e-book; display control means for switching, when a page switching operation is received from a user, the page displayed on the display means, and zooming in and displaying, when a page zooming-in operation is received from the user, a specified part on the page displayed on the display means; advertisement data acquisition means for acquiring, based on a history of the page and the zoomed-in part displayed on the display means, advertisement data associated with an advertisement subject selected from advertisement subjects determined in advance for the page and the zoomed-in part; and update means for updating the advertisement page based on the advertisement data acquired by the advertisement data acquisition means.

According to an aspect of the present invention, the update means updates an advertisement page which has not been displayed on the display means yet based on the advertisement data acquired by the advertisement data acquisition means.

According to an aspect of the present invention, the e-book advertisement system further includes calculation means for calculating, based on at least one of a period of display and a number of times of display of the page and the zoomed-in part displayed on the displaymeans, an evaluation value for each of the advertisement subjects determined in advance for the page and the zoomed-in part, and the advertisement data acquisition means selects, based on the evaluation value calculated for the each of the advertisement subjects, an advertisement subject to be provided to the user, and acquires the advertisement data associated with the selected advertisement subject.

According to an aspect of the present invention, the calculation means calculates the evaluation value for the each of the advertisement subjects determined in advance for the page and the zoomed-in part with a weight to be multiplied by the period of display or the number of times of display of the zoomed-in part being larger than a weight to be multiplied by the period of display or the number of times of display of the page.

According to an aspect of the present invention, the display control means provides control so that the advertisement page updated based on the advertisement data is displayed on the display means for a period longer than a period determined for the advertisement data acquired by the advertisement data acquisition means.

According to the present invention, there is also provided an e-book advertisement method, including: acquiring an e-book including a text page and an advertisement page; displaying at least a part of a page included in the e-book on display means; switching, when a page switching operation is received from a user, a page displayed on the display means, and zooming in and displaying, when a page zooming-in operation is received from the user, a specified part on the page displayed on the display means; acquiring, based on a history of the page and the zoomed-in part displayed on the display means, advertisement data associated with an advertisement subject selected from advertisement subjects determined in advance for the page and the zoomed-in part; and updating the advertisement page based on the acquired advertisement data.

According to the present invention, there is further provided an e-book advertisement system, including: a client device; and an advertisement-provision device, in which: the client device includes: e-book acquisition means for acquiring an e-book including a text page and an advertisement page; display means for displaying at least a part of a page included in the e-book; display control means for switching, when a page switching operation is received from a user, the page displayed on the display means, and zooming in and displaying, when a page zooming-in operation is received from the user, a specified part on the page displayed on the display means; recording means for recording a history of the page and the zoomed-in part displayed on the display means; and transmission means for transmitting the history of the page and the zoomed-in part recorded by the recording means to the advertisement-provision device; the advertisement-provision device includes: advertisement data acquisition means for acquiring, based on the history of the page and the zoomed-in part transmitted by the transmission means, advertisement data associated with an advertisement subjectselected from advertisement subjects determined in advance for the page and the zoomed-in part; and advertisement data transmission means for transmitting the advertisement data acquired by the advertisement data acquisition means to the client device; and the client device further includes update means for updating the advertisement page based on the advertisement data transmitted by the advertisement data transmission means.

According to an aspect of the present invention, the transmission means transmits, at a timing when the client device communicates to/from the advertisement-provision device, the history of the page and the zoomed-in part recorded by the recording means by the timing to the advertisement-provision device.

According to the present invention, there is further provided a client device, including: e-book acquisition means for acquiring an e-book including a text page and an advertisement page; display means for displaying at least a part of a page included in the e-book; display control means for switching, when a page switching operation is received from a user, the page displayed on the display means, and zooming in and displaying, when a page zooming-in operation is received from the user, a specified part on the page displayed on the display means; recording means for recording a history of the page and the zoomed-in part displayed on the display means; advertisement data acquisition means for acquiring, based on the history of the page and the zoomed-in part recorded by the recording means, advertisement data associated with an advertisement subject selected from advertisement subjects determined in advance for the page and the zoomed-in part; and update means for updating the advertisement page based on the advertisement data acquired by the advertisement data acquisition means.

According to the present invention, there is further provided a program for controlling a computer to function as: e-book acquisition means for acquiring an e-book including a text page and an advertisement page; display means for displaying at least a part of a page included in the e-book; display control means for switching, when a page switching operation is received from a user, the page displayed on the display means, and zooming in and displaying, when a page zooming-in operation is received from the user, a specified part on the page displayed on the display means; recording means for recording a history of the page and the zoomed-in part displayed on the display means; advertisement data acquisition means for acquiring, based on the history of the page and the zoomed-in part recorded by the recording means, advertisement data associated with an advertisement subject selected from advertisement subjects determined in advance for the page and the zoomed-in part; and update means for updating the advertisement page based on the advertisement data acquired by the advertisement data acquisition means.

According to the present invention, there is further provided an information-recording medium having recorded thereon a program for controlling a computer to function as: e-book acquisition means for acquiring an e-book including a text page and an advertisement page; display means for displaying at least a part of a page included in the e-book; display control means for switching, when a page switching operation is received from a user, the page displayed on the display means, and zooming in and displaying, when a page zooming-in operation is received from the user, a specified part on the page displayed on the display means; recording means for recording a history of the page and the zoomed-in part displayed on the display means; advertisement data acquisition means for acquiring, based on the history of the page and the zoomed-in part recorded by the recording means, advertisement data associated with an advertisement subject selected from advertisement subjects determined in advance for the page and the zoomed-in part; and update means for updating the advertisement page based on the advertisement data acquired by the advertisement data acquisition means.

According to the present invention, there is further provided an advertisement-provision device for providing a client device with advertisement data of an e-book including a text page and an advertisement page, the client device including: e-book acquisition means for acquiring the e-book; display means for displaying at least a part of a page included in the e-book; display control means for switching, when a page switching operation is received from a user, the page displayed on the display means, and zooming in and displaying, when a page zooming-in operation is received from the user, a specified part on the page displayed on the display means; recording means for recording a history of the page and the zoomed-in part displayed on the display means; and transmission means for transmitting the history of the page and the zoomed-in part recorded by the recording means to the advertisement-provision device, the advertisement-provision device including: advertisement data acquisition means for acquiring, based on the history of the page and the zoomed-in part transmitted by the transmission means, the advertisement data associated with an advertisement subject selected from advertisement subjects determined in advance for the page and the zoomed-in part; and advertisement data transmission means for transmitting the advertisement data acquired by the advertisement data acquisition means to the client device.

According to the present invention, there is further provided a program for controlling a computer, which functions as an advertisement-provision device for providing a client device with advertisement data of an e-book including a text page and an advertisement page, the client device including: e-book acquisition means for acquiring the e-book; display means for displaying at least a part of a page included in the e-book; display control means for switching, when a page switching operation is received from a user, the page displayed on the display means, and zooming in and displaying, when a page zooming-in operation is received from the user, a specified part on the page displayed on the display means; recording means for recording a history of the page and the zoomed-in part displayed on the display means; and transmission means for transmitting the history of the page and the zoomed-in part recorded by the recording means to the advertisement-provision device, the program controlling the computer to function as: advertisement data acquisition means for acquiring, based on the history of the page and the zoomed-in part transmitted by the transmission means, the advertisement data associated with an advertisement subject selected from advertisement subjects determined in advance for the page and the zoomed-in part; and advertisement data transmission means for transmitting the advertisement data acquired by the advertisement data acquisition means to the client device.

According to the present invention, there is further provided an information-recording medium having recorded thereon a program for controlling a computer, which functions as an advertisement-provision device for providing a client device with advertisement data of an e-book including a text page and an advertisement page, the client device including: e-book acquisition means for acquiring the e-book; display means for displaying at least a part of a page included in the e-book; display control means for switching, when a page switching operation is received from a user, the page displayed on the display means, and zooming in and displaying, when a page zooming-in operation is received from the user, a specified part on the page displayed on the display means; recording means for recording a history of the page and the zoomed-in part displayed on the display means; and transmission means for transmitting the history of the page and the zoomed-in part recorded by the recording means to the advertisement-provision device, the program controlling the computer to function as: advertisement data acquisition means for acquiring, based on the history of the page and the zoomed-in part transmitted by the transmission means, the advertisement data associated with an advertisement subject selected from advertisement subjects determined in advance for the page and the zoomed-in part; and advertisement data transmission means for transmitting the advertisement data acquired by the advertisement data acquisition means to the client device.

According to the present invention, there is further provided an e-book update system, including: display means for displaying at least a part of a page included in an e-book; display control means for switching, when a page switching operation is received from a user, the page displayed on the display means, and zooming in and displaying, when a page zooming-in operation is received from the user, a specified part on the page displayed on the display means; data acquisition means for acquiring, based on a history of the page and the zoomed-in part displayed on the display means, data associated with classification information selected from classification information determined in advance for the page and the zoomed-in part; and update means for updating the page included in the e-book based on the data acquired by the data acquisition means.

Advantageous Effects of Invention According to an aspect of the present invention, advertisements in an e-book may be updated based on contents which a user has browsed and has paid attention to in the e-book.

### Brief Description of Drawings

[FIG. 1] A system configuration diagram of an e-book advertisement system according to an embodiment of the present invention.
[FIG. 2] A sequence diagram illustrating an example of processing carried out in the e-book advertisement system.
[FIG. 3] A diagram illustrating an example of an e-book.
[FIG. 4A] A diagram illustrating an example of the e-book after advertisement pages are updated.
[FIG. 4B] A diagram illustrating an example of the e-book after an advertisement page is updated.
[FIG. 5] A functional block diagram illustrating an example of functions provided in a client device and an advertisement data delivery server.
[FIG. 6] A diagram illustrating an example of browsing history data.
[FIG. 7] A diagram illustrating an example of an advertisement subj ect table.
[FIG. 8] A diagram illustrating an example of an advertisement data table.
[FIG. 9] A diagram illustrating an example of evaluation values of classification information.

### Description of Embodiment

A description is now given of an embodiment mode (hereinafter referred to as embodiment) for carrying out the present invention, referring to the drawings.

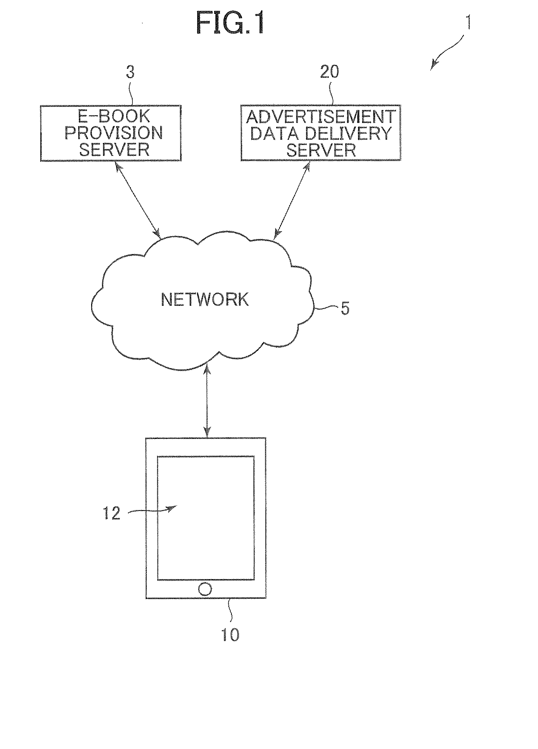

FIG. 1 illustrates a system configuration diagram of an e-book advertisement system 1 according to this embodiment. As illustrated in FIG. 1, the e-book advertisement system 1 includes an e-book provision server 3, a client device 10, and an advertisement data delivery server 20. The e-book provision server 3, the client device 10, and the advertisement data delivery server 20 are respectively connected to one another for data communication via a network 5 such as the Internet.

The e-book provision server 3 is a computer which stores one or more e-books, and when the e-book provision server 3 receives a delivery request for an e-book (such as a purchase request for an e-book) from the client device 10, provides the client device 10 with the requested e-book. Note that, the e-book according to this embodiment is data obtained by digitizing a book, a magazine, or the like, and the e-book includes text pages for showing contents of the e-book and advertisement pages for placing advertisements. Note that, the advertisement page is a page provided with a display area for advertisements in at least a part thereof.

The client device 10 is a computer having functions of receiving an e-book from the e-book provision server 3, and displaying the received e-book in response to an operation of a user. According to this embodiment, the client device 10 includes a touch panel 12 functioning as display means and input receiving means, and displays the contents of the e-book on the touch panel 12.

The advertisement data delivery server 20 is a computer for selecting, based on a browsing history of the user for the e-book recorded in the client device 10, advertisement data to be displayed on advertisement pages included in the e-book, and delivering the selected advertisement data to the client device 10. On the client device 10, the contents of the advertisement pages are updated based on the advertisement data delivered from the advertisement data delivery server 20.

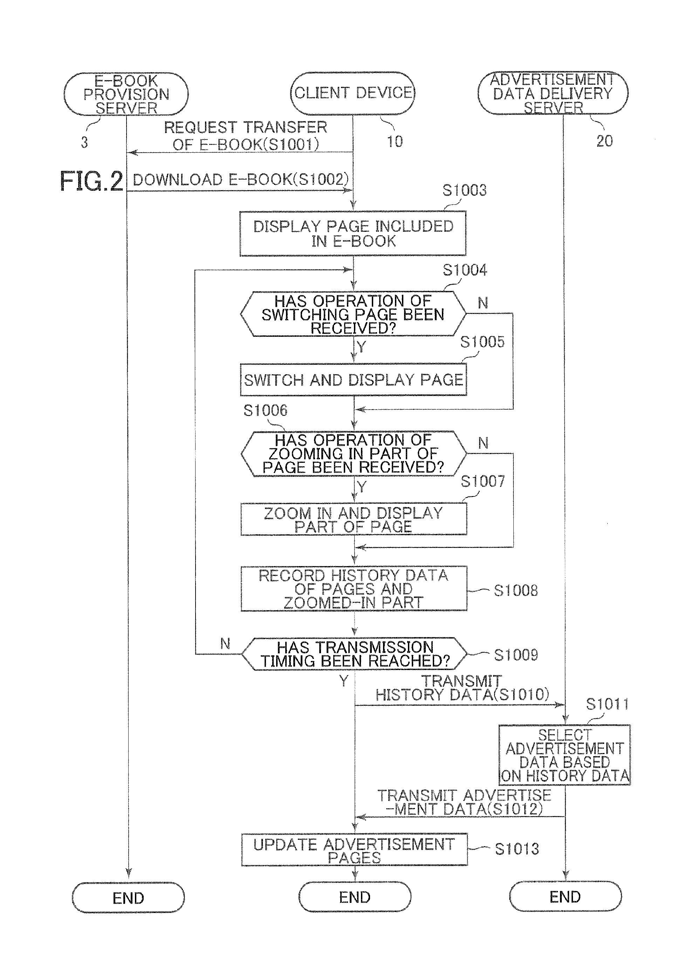

Referring to a sequence diagram illustrated in FIG. 2, a description is now given of an example of processing carried out on the e-book advertisement system 1.

As illustrated in FIG. 2, the client device 10 requests the e-book provision server 3 to deliver an e-book (S1001), and receives (downloads) the e-book from the e-book provision server 3 (S1002).

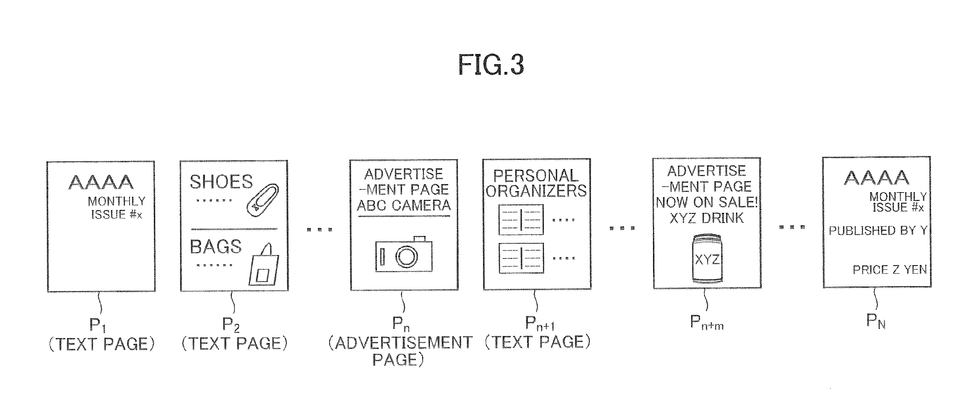

FIG. 3 illustrates an example of the e-book received by the client device 10. The e-book illustrated in FIG. 3 includes 1st to N-th pages, and each page is denoted by Pᵢ. On this occasion, in the example illustrated in FIG. 3, P₁, P₂, Pₙ₊₁, and the like represent text pages of the e-book, and Pₙ, Pₙ₊ₘ, and the like represent advertisement pages showing advertisements. In a state in which the client device 10 has just received the e-book, advertisements on the advertisement pages are advertisements in an initial state, and the advertisement in the initial state includes a state in which no advertisements are placed.

A description now returns to the sequence diagram in FIG. 2. On the client device 10, in response to an operation received by the touch panel 12 from the user, a page included in the received e-book is displayed on the touch panel 12 (S1003). On the client device 10, when an operation for switching the page displayed on the touch panel 12 is received (Y in S1004), the page is switched and displayed (S1005), and when an operation for zooming in a part of the page displayed on the touch panel 12 is received (Y in S1006), the part of the page is zoomed in and is displayed (S1007). For example, the switching operation for a page may be carried out by moving a finger from a state in which the finger is touched on a display area of the displayed page toward a direction of a destination page (so called flicking), and the zooming operation for a page may be carried out by, while a plurality of fingers are in contact with an area to be zoomed out of the displayed page, extending a gap between the fingers (so called pinching out).

The client device 10 records history data on the pages that have been displayed on the touch panel 12, and the zoomed-in part (S1008). The history data on the pages may include periods for which the pages are displayed, and the number of times of the display. The history data on the zoomed-in part may include position information (for example, area information such as coordinate ranges, or an upper left position and a lower right position), a period of display, and the number of times of the display on the zoomed-in part.

When the client device 10 determines that a transmission timing at which the recorded history data is to be transmitted to the advertisement data delivery server 20 has not been reached (N in S1009), the client device 10 returns to S1004, and repeats the subsequent processing. When the client device 10 determines that the transmission timing has been reached (Y in S1009), the client device 10 transmits the recorded history data to the advertisement data delivery server 20 (S1010). Note that, the history data transmitted from the client device 10 to the advertisement data delivery server 20 includes identification information on the e-book. Moreover, the transmission timing may be, for example, a timing at which a predetermined period has elapsed after the e-book is displayed, a timing for communication to/from the advertisement data delivery server 20, a timing at which the number of recorded pages reaches a predetermined value, a timing at which a history of a text page determined in advance for an advertisement page included in the e-book is recorded, a timing at which browsing has reached a page determined in advance (or a timing at which all pages have been browsed) for the e-book, a timing for receiving a program or data from the e-book provision server 3 or the advertisement data delivery server 20, a timing at which a browser program for the e-book is started or stopped, and a timing at which communication is available.

The advertisement data delivery server 20 selects advertisement data based on the history data transmitted from the client device 10 (S1011). The advertisement data delivery server 20 may store advertisement subjects (such as classification information on products and services to be advertised) in each page and each part of the page for each e-book, select an advertisement subject based on the history data received from the client device 10, and acquire advertisement data associated with the selected advertisement subject. For example, based on the history data received from the client device 10, when shoes are selected as the advertisement subject, the advertisement data delivery server 20 acquires advertisement data determined in advance for the shoes. The processing of selecting advertisement data is described in detail later.

The advertisement data delivery server 20 transmits the selected advertisement data to the client device 10 (S1012). On the client device 10, based on the advertisement data received from the advertisement data delivery server 20, advertisement pages in the e-book are updated (S1013).

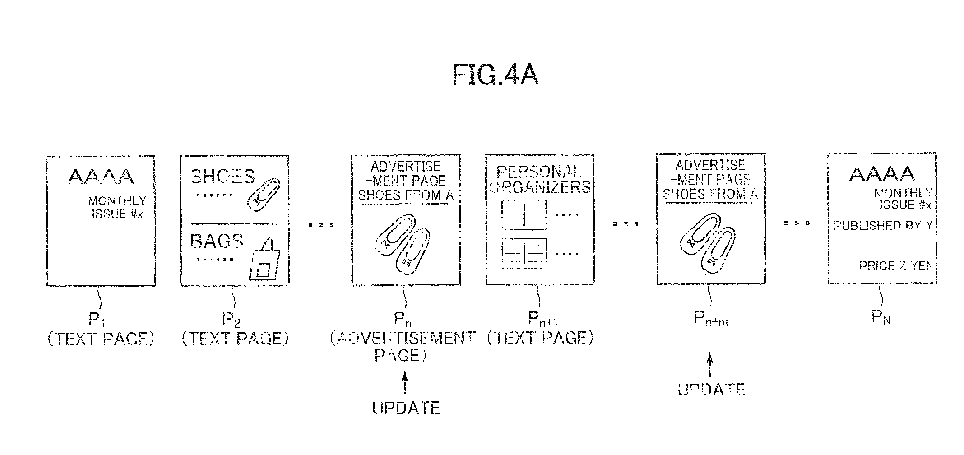

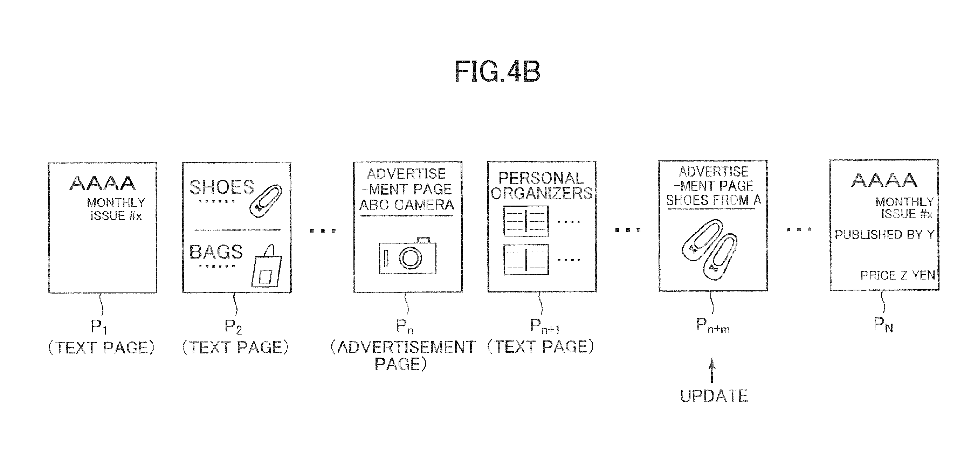

FIGS. 4A and 4B illustrate examples of the e-book after advertisement pages are updated. For example, a page to be updated by the advertisement data received from the advertisement data delivery server 20 may be at least one of advertisement pages which the user has not browsed on the client device 10. FIG. 4A illustrates an example of updated advertisement pages when pages starting from the page Pₙ have not been browsed. In the example illustrated in FIG. 4A, both Pₙ and Pₙ₊ₘ are updated, but one of them may be updated, or when there are a plurality of pieces of received advertisement data (for example, advertisements for shoes A and shoes B as "shoes" are acquired), different advertisements may be displayed on Pₙ and Pₙ₊ₘ. Moreover, FIG. 4B illustrates an example of an updated advertisement page when the page Pₙ has already been browsed and pages starting from Pₙ₊ₘ have not been browsed. In the example illustrated in FIG. 4B, Pₙ is not updated, and only Pₙ₊ₘ is updated.

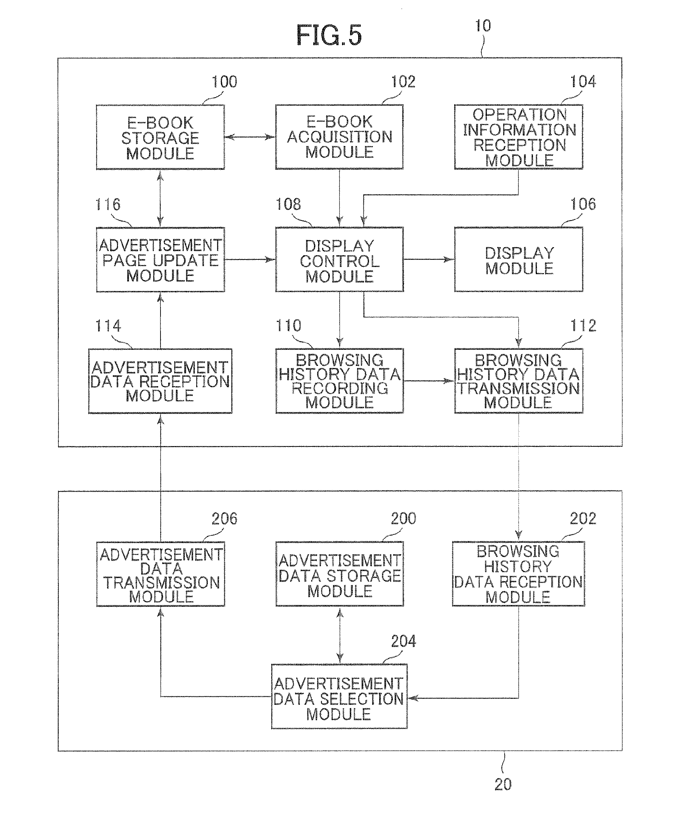

A flow of processing based on the sequence illustrated in FIG. 2 has been described above. A description is now given of an example of functions provided in the client device 10 and the advertisement data delivery server 20 in order to realize the above-mentioned processing, referring to a functional block diagram illustrated in FIG. 5.

First, a description is given of functions provided in the client device 10. As illustrated in FIG. 5, the client device 10 includes an e-book storage module 100, an e-book acquisition module 102, an operation information reception module 104, a display module 106, a display control module 108, a browsing history data recording module 110, a browsing history data transmission module 112, an advertisement data reception module 114, and an advertisement page update module 116.

Functions of the above-mentionedmodules provided in the client device 10 may be realized by a computer, which is provided with hardware such as control means including a CPU, storage means such as a memory, communication means such as a communication interface for transmitting/receiving data to/from external devices, and the touch panel 12, reading and executing a program stored in a computer-readable information storage medium. Note that, the program may be provided to the client device 10 via an information storage medium such as an optical disc, a magnetic disk, a magnetic tape, a magneto-optical disc, or a flash memory, or provided to the client device 10 via a data communication network such as the Internet.

The e-book storage module 100 is realized by storage means such as a semiconductor memory or a magnetic disk, and stores the e-books received from the e-book provision server 3.

The e-book acquisition module 102 acquires an e-book including text pages and advertisement pages. The e-book acquisition module 102 may acquire an e-book by reading the e-book stored in the e-book storage module 100, or may acquire an e-book by receiving the e-book from the e-book provision server 3.

The operation information reception module 104 receives information on an operation carried out by the user on the client device 10. According to this embodiment, the operation information reception module 104 detects a position of contact by the user on the touch panel 12 provided to the client device 10 and a change in the contact position, and determines, based on the detected contact position and change in the contact position, the operation information on the user. For example, the operation information reception module 104 receives various operations such as an operation of selecting an e-book, an operation of switching a displayed page of an e-book, and an operation of zooming in a part of a displayed page of an e-book. As described above, the switching operation for a page may be carried out by moving a finger from a state in which the finger is touched on the touch panel 12 displaying a displayed page toward a direction of a destination page (so called flicking), and the zooming operation for a page may be carried out by, while a plurality of fingers are in contact with the touch panel 12 displaying a displayed page, extending a gap between the fingers (so called pinching out). Of course, the respective operation methods are not limited to the above-mentioned methods, and other methods may be used. For example, a display object (such as an icon or a button) used for proceeding to a next page, a display object used for returning to a previous page, and a display object used for instructing zooming in/out may be provided on each of pages of an e-book, and, by selecting (for example, depressing) these display objects, the operation of switching a page and the operation of zooming in/out a page may be carried out.

The display module 106 is realized by a display such as the touch panel 12, and displays a part of a page included in the e-book selected by an operation received by the operation information reception module 104. For example, on the display module 106, one page of the e-book may be displayed for each time, or two facing pages of the e-book may be displayed. A three-axis acceleration sensor may be provided on the client device 10 so that an inclination of the client device 10 may be detected based on an acceleration detected by the acceleration sensor, and, depending on the detected inclination, the display may be switched between one page of the e-book each time and two facing pages of the e-book.

The display control module 108 provides control of switching or zooming in a page of the e-book displayed on the display module 106 in response to an operation of the user received by the operation information reception module 104. Specifically, when the operation information reception module 104 receives the operation of switching a page displayed on the display module 106, the display control module 108 causes the display module 106 to switch and display the displayed page. Moreover, when the operation information reception module 104 receives the operation of zooming a part of a page displayed on the display module 106, the display control module 108 causes the display module 106 to zoom in and display the part of the page specified by the operation.

Thebrowsinghistorydata recordingmodule 110 recordsbrowsing history data including the history regarding pages and zoomed-in parts of the e-books displayed on the displaymodule 106. For example, when an entire page is displayed on the display module 106, the browsing history data recording module 110 records information on the page and a period of display of the page in association with each other. Moreover, when a part of the page is zoomed in and is displayed on the display module 106, the browsing history data recording module 110 records information on the zoomed-in part and a period of display of the zoomed-in part in association with each other. The information on thezoomed-in partmayincludeinformation on the page, and position information (such as coordinate information, area information, and information on a zoomed-in object) of the zoomed-in part in the page.

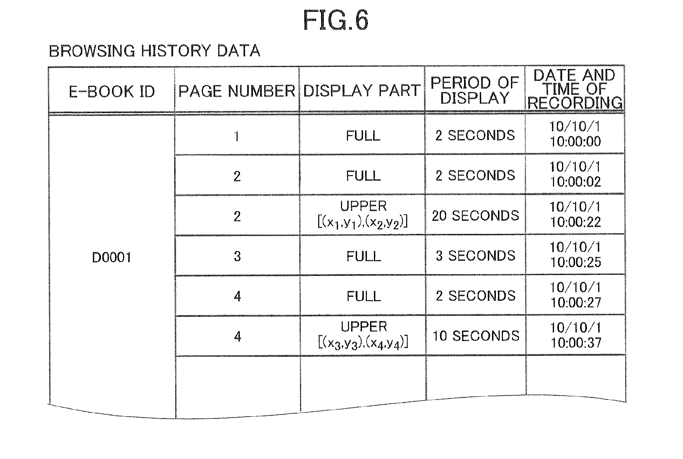

FIG. 6 illustrates an example of the browsing history data recorded by the browsing history data recording module 110. In the example illustrated in FIG. 6, identification information (e-book ID) of the e-book displayed on the display module 106, information on the displayed page (page number), a displayed part (display part), a period of display, and a date and a time of recording are recorded in association with one another. The browsing history data recording module 110 may determine that the area information of the display part on the page is "upper" when a part (display part) zoomed in and displayed on the touch panel 12 corresponds to an upper half part of the page, "lower" when the part corresponds to a lower half part of the page, and "upper left" when the part corresponds to the upper half and a left half of the page, and may store the determined area information in a field of the display part. Alternatively, the browsing history data recording module 110 may store a coordinate range (for example, [(x₁, y₁), (x₂, y₂)] indicates a rectangular area having an upper left corner at (x₁, y₁) and a lower right corner at (x₂, y₂)) of the display part in a page coordinate system (in which, for example, an upper left corner of the page is an origin, the horizontal direction is an X axis, and the vertical direction is a Y axis) in the field of the display part. Note that, the browsing history data recorded by the browsing history data recording module 110 is not limited to the above-mentioned example, and the browsing history data recording module 110 may record, for example, in place of or in addition to the period of display, the number of times of display on the display module 106.

The browsing history data transmission module 112 transmits the browsing history data recorded by the browsing history data recording module 110 to the advertisement data delivery server 20. The browsing history data transmission module 112 may determine whether or not a transmission timing for the browsing history data has been reached, and, when the browsing history data transmission module 112 determines that the transmission timing has been reached, the browsing history data transmission module 112 may transmit the history data recorded up to that timing by the browsing history data recording module 110 to the advertisement data delivery server 20. For example, the transmission timing may be a timing at which a predetermined period has elapsed after the e-book is displayed, a timing for communication to/from the advertisement data delivery server 20, a timing at which a sum of recorded periods of display exceeds a threshold, a timing at which the number of browsed pages reaches a predetermined value, a timing at which a history of a text page determined in advance for each advertisement page included in the e-book is recorded, a timing at which browsing has reached a page determined in advance (or a timing at which all pages have been browsed) for the e-book, a timing for receiving a program or data from the e-book provision server 3 or the advertisement data delivery server 20, a timing at which a browser program for the e-book is started or stopped, and a timing at which communication is available. Note that, the browsing history data transmission module 112 may transmit, each time the above-mentioned transmission timing has been reached, the browsing history data to the advertisement data delivery server 20.

The advertisement data reception module 114 receives, based on the browsing history data transmitted by the browsing history data transmission module 112 to the advertisement data delivery server 20, advertisement data selected by the advertisement data delivery server 20.

The advertisement data update module 116 updates, based on the advertisement data received by the advertisement data reception module 114, at least one advertisement page. The advertisement page update module 116 may select, for example, at least one of advertisement pages of the e-book for which the browsing history is not recorded by the browsing history data recording module 110, and may overwrite an advertisement in the selected advertisement page with the received advertisement data. Moreover, the advertisement page update module 116 may select, based on the size of an advertisement of the advertisement data received by the advertisement data reception module 114, an advertisement page which is subject to the update out of advertisement pages included in the e-book. For example, the advertisement page update module 116 may select an advertisement page to be updated out of advertisement pages in which an advertisement display area in the advertisement page is larger than the size of the advertisement of the received advertisement data (namely, in which an advertisement may be placed without any part thereof extending out of the advertisement page) out of the advertisement pages included in the e-book.

Moreover, when a degree of importance is defined for the advertisement data received by the advertisement data reception module 114, the display control module 108 may control the display module 106 to display an advertisement based on advertisement data for a period equal to or longer than a period corresponding to the degree of importance. For example, in a case where there are three levels of importance: high (display for ten seconds), intermediate (display for three seconds), and a low (without control), when the level of importance of received advertisement data is "high", the display control module 108 may prohibit the switching of an advertisement page based on the advertisement data for 10 seconds, or may repeat the display of the advertisement page based on the advertisement data so that the advertisement page is displayed for 10 seconds in total.

A description is now given of functions provided in the advertisement data delivery server 20. As illustrated in FIG. 5, the advertisement data delivery server 20 includes an advertisement data storage module 200, a browsing history data reception module 202, an advertisement data selectionmodule 204, and an advertisement data transmission module 206.

Functions of each of the above-mentioned components provided in the advertisement data provision server 20 may be realized by a computer, which is provided with hardware including control means such as a CPU, storage means such as a memory, and communication means such as a communication interface for transmitting/receiving data to/from external devices, reading and executing a program stored in a computer-readable information storage medium. Note that, the program may be provided to the advertisement data provision server 20 via an information storage medium such as an optical disc, a magnetic tape, a magneto-optical disc, or a flash memory, or provided to the advertisement data provision server 20 via a data communication network such as the Internet.

The advertisement data storage module 200 stores, for each of the e-books, an advertisement subject (such as attribute information on an product or a service to be advertised) associated with each page and each part of the page (zoomed-in part) of the e-book, and stores advertisement data for each of advertisement subjects.

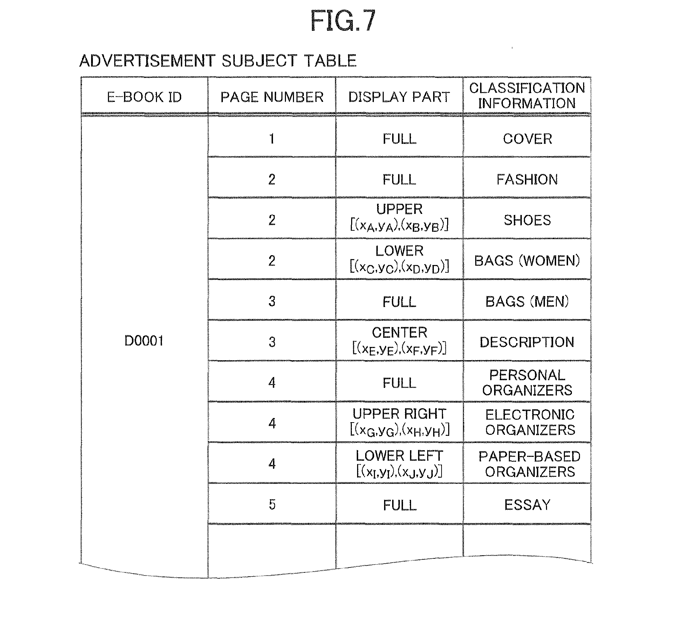

FIG. 7 illustrates an example of an advertisement subj ect table for each e-book to be stored in the advertisement data storage module 200. As illustrated in FIG. 7, in the advertisement subject table, identification information on the e-book (e-book ID), a number of a page in the e-book, a display part of the page (full or partial), and classification information (genre information) on a product and a service which are subject to advertisement are stored in association with one another. For example, as data to be stored in the display part, a coordinate range of the display part in a page coordinate system (in which, for example, an upper left corner of the page is an origin, the horizontal direction is an X axis, and the vertical direction is a Y axis), for example, "upper" when the display part corresponds to an upper half part of the page, "lower" when the display part corresponds to a lower half part of the page, and "upper left" when the display part corresponds to the upper half and a left half of the page, may be stored in the field for the display part.

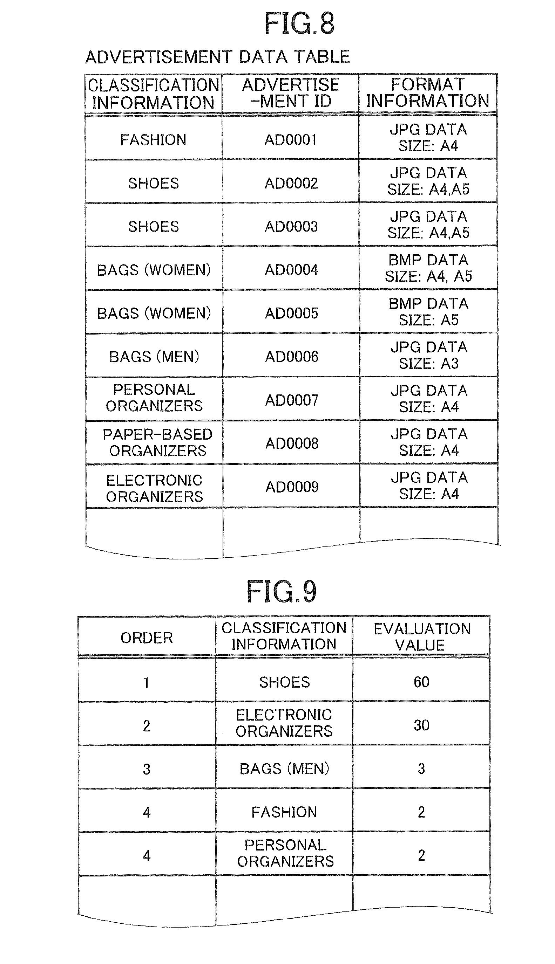

FIG. 8 illustrates an example of the advertisement data table storing advertisement data corresponding to each piece of classification information stored in the advertisement data storage module 200. As illustrated in FIG. 8, in the advertisement data table, in association with the classification information, identification information on advertisement data (advertisement ID) and information on format (format information) of the advertisement data storing a data format and a size of the advertisement data are stored. Note that, actual data of the advertisement data is associated with the advertisement ID, and is stored in the advertisement data storage module 200.

The browsing history data reception module 202 receives the browsing history data transmitted by the browsing history data transmission module 112 of the client device 10.

The advertisement data selection module 204 selects advertisement data from the advertisement data storage module 200 based on the browsing history data received by the browsing history data reception module 202. A description is now given of an example of processing of selecting advertisement data by the advertisement data selection module 204.

The advertisement data selection module 204 refers to, based on an e-book ID included in the browsing history data, a corresponding advertisement subject table in the advertisement data storage module 200. Then, the advertisement data selection module 204 identifies classification information to which each of sets of a page number and a display part included in the browsing history data corresponds. For example, in the advertisement subject table illustrated in FIG. 7, for a set of the e-book ID=D0001, the page number=2, and the display part=upper, the classification information=shoes is identified. In a case where a coordinate range (referred to as recorded coordinate range) is stored in the display part in the browsing history data, a record storing a corresponding coordinate range out of coordinate ranges (referred to as set coordinate ranges) stored in the advertisement subject table may be selected. On this occasion, for example, the advertisement data selection module 204 may extract set coordinate ranges having the same e-book ID and page number as those of the recorded coordinate range, and, out of the extracted set coordinate ranges, may select a set coordinate range having the maximum overlap with the recorded coordinate range, or may select set coordinate ranges having a ratio of the overlap with the recorded coordinate range equal to or larger than a predetermined value. Then, the advertisement data selection module 204 calculates, for each page and each zoomed-in part of a page included in the browsing history data, an evaluation value for each piece of the associated classification (genre) information in the referred advertisement subject table.

The evaluation value for each piece of the classification information may be calculated by, for example, summing products each of which is a period of display (or number of times of display) *a weight of page (or zoomed-in part) for a page (or zoomed-in part) stored in each of the records included in the history data. When the weight of the page is 1, the weight of a zoomed-in part may be w (>1), and the value of w may be fixed or may be a variable corresponding to a zooming-in ratio. Then, the advertisement data selection module 204 selects pieces of classification information each having an calculated evaluation value, which is equal to or higher in position of descending order than a predetermined position or larger than a threshold out of the pieces of classification information, and acquires advertisement data of advertisement IDs in the advertisement data table associated with the selected pieces of classification information.

FIG. 9 illustrates, for the browsing history data illustrated in FIG. 6, an example of evaluation values for respective pieces of classification information calculated for the advertisement subject table illustrated in FIG. 7. In the example illustrated in FIG. 9, the evaluation values are calculated under a condition that the weight for the zoomed-in part w is 3. When, in the example illustrated in FIG.9, classificationinformation having the maximum evaluation value is selected, the classification information "shoes" is selected. Then, based on the example of the advertisement table illustrated in FIG. 8, the advertisement data selection module 204 acquires advertisement data having advertisement IDs "AD0002" and "AD0003" associated with the classification information "shoes".

The advertisement data transmission module 206 transmits the advertisement data selected by the advertisement data selection module 204 to the client device 10 which has transmitted the browsing history data used for the selection of the advertisement data.

According to the above-mentioned e-book advertisement system 1, contents of advertisements placed in the e-book can be updated based on the contents the user has browsed and has paid attention to in the e-book. Moreover, according to the e-book advertisement system 1, based on the browsing history of the user, by updating advertisements placed on advertisement pages which the user has not browsed, possibility that the user views the updated advertisements is increased, and the advertisements having contents of interest to the user can be quickly provided. Moreover, according to the e-book advertisement system 1, advertisements having contents which the user has browsed for a long period and a large number of times can be provided to the user. Moreover, according to the e-book advertisement system 1, a part zoomed in and browsed by the user out of the e-book is evaluated as a subject of particular interest to the user, and advertisements selected based on the evaluation result can be provided to the user. Moreover, according to the e-book advertisement system 1, a period for which the user is browsing an advertisement can be controlled so as to guarantee a period requested by a provider of the advertisement.

The present invention is not limited to the above-mentioned embodiment. For example, the e-book advertisement system 1 has been described by using the example in which the e-book provision server 3 and the advertisement data delivery server 20 are configured as independent devices, but the e-book provision server 3 and the advertisement data delivery server 20 may be configured as a single device.

Moreover, the client device 10 may be provided with, along with the e-book, the advertisement subject table for the e-book, and, in the client device 10, based on the browsing history data recorded by the browsing history data recording module 110, the evaluation value for each of advertisement subject (classification information) maybe calculated. Then, the client device 10 may select advertisement subjects based on the calculated evaluation values, and may transmit the selection results to the advertisement data delivery server 20. In this configuration, the client device 10 may record a history of a period of display and the number of times of display for each of the advertisement subjects.

Moreover, the client device 10 may be provided with, along with the e-book, all of the advertisement subject table, the advertisement data table, and the advertisement data for the e-book, thereby providing the client device 10 with the functions of the advertisement data selection module 204. With this configuration, the necessity of communication to/from the advertisement data delivery server 20 is eliminated, and hence even if the client device 10 cannot connect to the network, contents of advertisements placed on advertisement pages in the e-book can be updated based on the browsing history of the user.

Moreover, in the above-mentioned embodiment, there has been described the example in which, based on the browsing history of the e-book, advertisement pages in the e-book are updated, but text pages of the e-book may be updated. In this case, pages based on data acquired based on the browsing history of the e-book may be added to the e-book, or at least a part of text pages included in the e-book may be replaced by pages based on the data. Of course, in a case where the form of updating text pages of the e-book is employed, the e-book may not include advertisement pages.

Moreover, in the embodiment, the example using the tablet computer having the touch panel 12 as the client device 10 has been described, but it should be understood that, as the client device 10, a stationary or portable personal computer, a mobile phone, a personal digital assistant, a game machine, or the like may be used.

## Claims

1. An e-book advertisement system, comprising:
e-book acquisition means for acquiring an e-book including a text page and an advertisement page;
display means for displaying at least a part of a page included in the e-book;
display control means for switching, when a page switching operation is received from a user, the page displayed on the display means, and zooming in and displaying, when a page zooming-in operation is received from the user, a specified part on the page displayed on the display means;
advertisement data acquisition means for acquiring, based on a history of the page and the zoomed-in part displayed on the display means, advertisement data associated with an advertisement subject selected from advertisement subjects determined in advance for the page and the zoomed-in part; and
update means for updating the advertisement page based on the advertisement data acquired by the advertisement data acquisition means.

2. The e-book advertisement system according to claim 1, wherein the update means updates an advertisement page which has not been displayed on the display means yet based on the advertisement data acquired by the advertisement data acquisition means.

3. The e-book advertisement system according to claim 1 or 2, further comprising calculation means for calculating, based on at least one of a period of display and a number of times of display of the page and the zoomed-in part displayed on the display means, an evaluation value for each of the advertisement subjects determined in advance for the page and the zoomed-in part,
wherein the advertisement data acquisition means selects, based on the evaluation value calculated for the each of the advertisement subjects, an advertisement subject to be provided to the user, and acquires the advertisement data associated with the selected advertisement subject.

4. The e-book advertisement system according to claim 3, wherein the calculation means calculates the evaluation value for the each of the advertisement subjects determined in advance for the page and the zoomed-in part with a weight to be multiplied by the period of display or the number of times of display of the zoomed-in part being larger than a weight to be multiplied by the period of display or the number of times of display of the page.

5. The e-book advertisement system according any one of claims 1 to 4, wherein the display control means provides control so that the advertisement page updated based on the advertisement data is displayed on the display means for a period longer than a period determined for the advertisement data acquired by the advertisement data acquisition means.

6. An e-book advertisement method, comprising:
acquiring an e-book including a text page and an advertisement page;
displaying at least a part of a page included in the e-book on display means;
switching, when a page switching operation is received from a user, a page displayed on the display means, and zooming in and displaying, when a page zooming-in operation is received from the user, a specified part on the page displayed on the display means;
acquiring, based on a history of the page and the zoomed-in part displayed on the display means, advertisement data associated with an advertisement subject selected from advertisement subjects determined in advance for the page and the zoomed-in part; and
updating the advertisement page based on the acquired advertisement data.

7. An e-book advertisement system, comprising:
a client device; and
an advertisement-provision device, wherein:
the client device includes:
e-book acquisition means for acquiring an e-book including a text page and an advertisement page;
display means for displaying at least a part of a page included in the e-book;
display control means for switching, when a page switching operation is received from a user, the page displayed on the display means, and zooming in and displaying, when a page zooming-in operation is received from the user, a specified part on the page displayed on the display means;
recording means for recording a history of the page and the zoomed-in part displayed on the display means; and
transmission means for transmitting the history of the page and the zoomed-in part recorded by the recording means to the advertisement-provision device;
the advertisement-provision device includes:
advertisement data acquisition means for acquiring, based on the history of the page and the zoomed-in part transmitted by the transmission means, advertisement data associated with an advertisement subject selected from advertisement subjects determined in advance for the page and the zoomed-in part; and
advertisement data transmission means for transmitting the advertisement data acquired by the advertisement data acquisition means to the client device; and
the client device further includes update means for updating the advertisement page based on the advertisement data transmitted by the advertisement data transmission means.

8. The e-book advertisement system according to claim 7, wherein the transmissionmeans transmits, at a timing when the client device communicates to/from the advertisement-provision device, the history of the page and the zoomed-in part recorded by the recording means by the timing to the advertisement-provision device.

9. A client device, comprising:
e-book acquisition means for acquiring an e-book including a text page and an advertisement page;
display means for displaying at least a part of a page included in the e-book;
display control means for switching, when a page switching operation is received from a user, the page displayed on the display means, and zooming in and displaying, when a page zooming-in operation is received from the user, a specified part on the page displayed on the display means;
recording means for recording a history of the page and the zoomed-in part displayed on the display means;
advertisement data acquisition means for acquiring, based on the history of the page and the zoomed-in part recorded by the recording means, advertisement data associated with an advertisement subject selected from advertisement subjects determined in advance for the page and the zoomed-in part; and
update means for updating the advertisement page based on the advertisement data acquired by the advertisement data acquisition means.

10. A program for controlling a computer to function as:
e-book acquisition means for acquiring an e-book including a text page and an advertisement page;
display means for displaying at least a part of a page included in the e-book;
display control means for switching, when a page switching operation is received from a user, the page displayed on the display means, and zooming in and displaying, when a page zooming-in operation is received from the user, a specified part on the page displayed on the display means;
recording means for recording a history of the page and the zoomed-in part displayed on the display means;
advertisement data acquisition means for acquiring, based on the history of the page and the zoomed-in part recorded by the recording means, advertisement data associated with an advertisement subject selected from advertisement subjects determined in advance for the page and the zoomed-in part; and
update means for updating the advertisement page based on the advertisement data acquired by the advertisement data acquisition means.

11. An information-recording medium having recorded thereon a program for controlling a computer to function as:
e-book acquisition means for acquiring an e-book including a text page and an advertisement page;
display means for displaying at least a part of a page included in the e-book;
display control means for switching, when a page switching operation is received from a user, the page displayed on the display means, and zooming in and displaying, when a page zooming-in operation is received from the user, a specified part on the page displayed on the display means;
recording means for recording a history of the page and the zoomed-in part displayed on the display means;
advertisement data acquisition means for acquiring, based on the history of the page and the zoomed-in part recorded by the recording means, advertisement data associated with an advertisement subject selected from advertisement subjects determined in advance for the page and the zoomed-in part; and
update means for updating the advertisement page based on the advertisement data acquired by the advertisement data acquisition means.

12. An advertisement-provision device for providing a client device with advertisement data of an e-book including a text page and an advertisement page,
the client device including:
e-book acquisition means for acquiring the e-book;
display means for displaying at least a part of a page included in the e-book;
display control means for switching, when a page switching operation is received from a user, the page displayed on the display means, and zooming in and displaying, when a page zooming-in operation is received from the user, a specified part on the page displayed on the display means;
recording means for recording a history of the page and the zoomed-in part displayed on the display means; and
transmission means for transmitting the history of the page and the zoomed-in part recorded by the recording means to the advertisement-provision device,
the advertisement-provision device comprising:
advertisement data acquisition means for acquiring, based on the history of the page and the zoomed-in part transmitted by the transmission means, the advertisement data associated with an advertisement subject selected from advertisement subjects determined in advance for the page and the zoomed-in part; and
advertisement data transmission means for transmitting the advertisement data acquired by the advertisement data acquisition means to the client device.

13. A program for controlling a computer, which functions as an advertisement-provision device for providing a client device with advertisement data of an e-book including a text page and an advertisement page,
the client device including:
e-book acquisition means for acquiring the e-book;
display means for displaying at least a part of a page included in the e-book;
display control means for switching, when a page switching operation is received from a user, the page displayed on the display means, and zooming in and displaying, when a page zooming-in operation is received from the user, a specified part on the page displayed on the display means;
recording means for recording a history of the page and the zoomed-in part displayed on the display means; and
transmission means for transmitting the history of the page and the zoomed-in part recorded by the recording means to the advertisement-provision device,
the program controlling the computer to function as:
advertisement data acquisition means for acquiring, based on the history of the page and the zoomed-in part transmitted by the transmission means, the advertisement data associated with an advertisement subject selected from advertisement subjects determined in advance for the page and the zoomed-in part; and
advertisement data transmission means for transmitting the advertisement data acquired by the advertisement data acquisition means to the client device.

14. An information-recording medium having recorded thereon a program for controlling a computer, which functions as an advertisement-provision device for providing a client device with advertisement data of an e-book including a text page and an advertisement page,
the client device including:
e-book acquisition means for acquiring the e-book;
display means for displaying at least a part of a page included in the e-book;
display control means for switching, when a page switching operation is received from a user, the page displayed on the display means, and zooming in and displaying, when a page zooming-in operation is received from the user, a specified part on the page displayed on the display means;
recording means for recording a history of the page and the zoomed-in part displayed on the display means; and
transmission means for transmitting the history of the page and the zoomed-in part recorded by the recording means to the advertisement-provision device,
the program controlling the computer to function as:
advertisement data acquisition means for acquiring, based on the history of the page and the zoomed-in part transmitted by the transmission means, the advertisement data associated with an advertisement subject selected from advertisement subjects determined in advance for the page and the zoomed-in part; and
advertisement data transmission means for transmitting the advertisement data acquired by the advertisement data acquisition means to the client device.

15. An e-book update system, comprising:
display means for displaying at least a part of a page included in an e-book;
display control means for switching, when a page switching operation is received from a user, the page displayed on the display means, and zooming in and displaying, when a page zooming-in operation is received from the user, a specified part on the page displayed on the display means;
data acquisition means for acquiring, based on a history of the page and the zoomed-in part displayed on the display means, data associated with classification information selected from classification information determined in advance for the page and the zoomed-in part; and
update means for updating the page included in the e-book based on the data acquired by the data acquisition means.
